(19) Europäisches Patentamt / European Patent Office / Office européen des brevets

(11) **EP 3 522 080 B1**

(12) **EUROPEAN PATENT SPECIFICATION**

(45) Date of publication and mention
of the grant of the patent:
**09.09.2020 Bulletin 2020/37**

(51) Int Cl.:
*G06N 20/00* (2019.01)     *G06F 21/56* (2013.01)
*G06N 3/02* (2006.01)     *G06F 21/53* (2013.01)
*G06N 3/04* (2006.01)     *G06N 3/08* (2006.01)

(21) Application number: **18204711.8**

(22) Date of filing: **06.11.2018**

(54) **SYSTEM AND METHOD OF TRAINING A MACHINE LEARNING MODEL FOR DETECTION OF MALICIOUS CONTAINERS**

SYSTEM UND VERFAHREN ZUM TRAINIEREN EINES MASCHINENLERNMODELLS ZUR ERKENNUNG BÖSARTIGER BEHÄLTER

SYSTÈME ET PROCÉDÉ D'ENTRAÎNEMENT D'UN MODÈLE D'APPRENTISSAGE MACHINE POUR LA DÉTECTION DE CONTENANTS MALICIEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2018 RU 2018104438**
**07.09.2018 US 201816124255**

(43) Date of publication of application:
**07.08.2019 Bulletin 2019/32**

(73) Proprietor: **AO Kaspersky Lab**
**Moscow 125212 (RU)**

(72) Inventors:
• **KRYLOV, Vladimir V.**
**125212 MOSCOW (RU)**
• **LISKIN, Alexander V.**
**125212 MOSCOW (RU)**
• **ANTONOV, Alexey E.**
**125212 MOSCOW (RU)**

(74) Representative: **Chimini, Francesco**
**Jacobacci & Partners S.p.A.**
**Piazza della Vittoria 11**
**25122 Brescia (IT)**

(56) References cited:
**WO-A1-2018/045165      US-A1- 2017 017 793**
**US-A1- 2017 372 071**

## Description

### FIELD OF TECHNOLOGY

The present disclosure relates to antivirus technologies and, more specifically, to systems and methods of training and teaching machine learning models for detecting malicious containers.

### BACKGROUND

The rapid development of computer technologies in the recent decade, as well as the widespread use of various computing devices (personal computers, notebooks, tablets, smartphones, etc.), have become a powerful incentive to the use of these devices in various areas of activity and to solve a huge number of problems (from Internet surfing to bank transfers and electronic documentation). In parallel with the growth in the number of computing devices and software running on these devices, the number of malicious programs has also grown at a rapid pace.

At present, a huge number of kinds of malicious programs exist. Some of them steal personal and confidential information about users from the devices of said users (such as logins and passwords, banking information, electronic documents). Others turn the devices of users into so-called botnets for attacks such as distributed denial of service (DDoS) attacks, or to sort through passwords by the brute force method on other computers or computer networks. Still others propose paid content to users through intrusive advertising, paid subscriptions, sending of SMS to toll numbers, and so on.

Specialized programs, or antivirus applications, are used to deal with malicious programs, including the detecting of malicious programs, the preventing of infection and the restoring of computer systems infected with malicious programs. Antivirus programs employ diverse technologies to detect a whole array of malicious programs, such as static analysis and dynamic analysis. Static analysis refers to the analysis of a program for harmfulness, excluding launching or emulation of the working of the program being analyzed, on the basis of data contained in files making up the program being analyzed, during which statistical analysis may employ (i) signature analysis, i.e., searching for correspondences of a particular code section of a program being analyzed to a known code (signature) from a database of signatures of malicious programs; and (ii) white and black lists, i.e., searching for a computed check sum from a program being analyzed (or portions thereof) in a database of check sums of malicious programs (black lists) or a database of check sums of secure programs (white lists). Dynamic analysis refers to the analysis of a program for harmfulness on the basis of data obtained in the course of execution or emulation of the working of the program being analyzed, during which dynamic analysis may employ (i) heuristic analysis, i.e., emulation of the working of the program being analyzed, creating emulation logs (containing data on the API function calls, the parameters transmitted, the code sections of the program being analyzed, and so on), and searching for correspondences of the data from the logs so created with data from a database of emulated signatures of malicious programs; and (ii) proactive protection, i.e., intercepting of API function calls of a launched program being analyzed, creating of logs on the working of the program being analyzed (containing data on the API function calls, the parameters transmitted, the code sections of the program being analyzed, and so on), and searching for correspondences of the data from the logs so created with data from a database of calls of malicious programs.

Both static and dynamic analysis have their advantages and disadvantages. Static analysis is less demanding on the resources of the computer system on which the analysis is being done, and since it does not require the execution or emulation of the program being analyzed, statistical analysis is faster, but less effective, i.e., it has a lower percentage of detection of malicious programs and a higher percentage of false alarms (i.e., judging a file being analyzed by the antivirus program resources as being harmful, whereas the file being analyzed is safe). Dynamic analysis, because it uses data obtained during execution or emulation of the working of the program being analyzed, is slower and places greater demands on the resources of the computer system on which the analysis is being done, but it is also more effective. Modern antivirus programs employ complex analysis, including elements of both static and dynamic analysis.

The chief problem of antivirus scanning thus far remains the task of distributing the computing resources to perform the aforementioned scanning among the programs being analyzed. Given a large stream of programs being analyzed and limited computing resources, the following is at least possible: (i) a general lowering of the quality of the antivirus scan of the programs being analyzed (for example, the use of static analysis alone, excluding dynamic analysis); (ii) arbitrary excluding from the antivirus scan of a portion of the programs being analyzed, among which might be malicious ones (for example, the queue of programs awaiting an antivirus scan amounts to $N$, while the computing resources are only sufficient to perform an antivirus scan of $M < N$ programs, so that the last $N - M$ programs will be excluded from the antivirus scan); (iii) if the average quality of the antivirus scan is maintained for the programs being analyzed, a high quality for the scanning of safe programs and a low quality for the scanning of malicious programs (for example, the safe programs are analyzed by static and dynamic analysis, the malicious ones only by static analysis); and so forth, which in turn results in mistakes of the first and second kind.

Although the known detection techniques are good at detecting malicious scripts of a given type (scripts containing predetermined, known objects), they cannot handle the detection of malicious objects of unknown types (such as those types of scripts for which no teaching has been done, such as ActionScript). Furthermore, the known techniques cannot be used for rapid analysis of a large number of files (scripts) given limited access to computing resources, since in order to commence an analysis with the use of a trained model for detection, it is necessary at first to process the script being analyzed (up to its performance, i.e., the performing of the dynamic analysis), which is a resource-hungry operation.

**SUMMARY**

Examples of the present disclosure makes it possible to solve the problem of detecting malicious files with the use of elements of statistical analysis. Thus, a system and method is disclosed herein for detecting malicious file(s), and, more particularly, for techniques for training (and retraining) a machine learning model for detecting malicious container files.

According to one example of the present disclosure, a computer-implemented method for training a machine learning model for detecting malicious container files is provided. The method includes selecting a plurality of objects from a malicious container file, wherein a container file is a file that contains at least two or more objects constituting logically separate data regions of the container file. The method further includes determining at least one parameter for each object selected from the malicious container file. The at least one parameter characterizes a functional relation of the respective object to at least one other object in the container file. The method includes generating a first convolution associated with the malicious container file based on the determined at least one parameter. The first convolution comprises a multidimensional vector in which each element of the multidimensional vector corresponds to its own unique parameter among the determined parameters, while the value of the mentioned element corresponds to the number of objects for which the mentioned parameter has been determined. The method includes generating a second convolution associated with a safe container file based on determined parameters of objects that are chosen from the safe container file, and modifying a machine learning model based on the first convolution associated with the malicious container file and the second convolution associated with the safe container file. The machine learning model is configured to compute a degree of harmfulness of a container file under analysis.

In another example, the method further includes applying the machine learning model to a target container file to compute the degree of harmfulness of the target container file, wherein the computed degree of harmfulness of the target container file is a numerical value characterizing a probability that the target container file under analysis is malicious.

In another example, the method further includes, responsive to determining the computed degree of harmfulness is in a predetermined range of threshold values, retraining the machine learning model such that the degree of harmfulness as calculated with the retrained model is higher than the degree of harmfulness as calculated with the original machine learning model.

In another example, the method further includes scheduling an antivirus application to perform an antivirus scan of the target container file based on the computed degree of harmfulness.

In another example, the malicious container file is one of a PDF (Portable Document Format) document, a software distro, and a file archive.

In another example, the object selected from the container file is at least one of an executable file, a script, media data, and another container file.

In another example, the determined parameters of at least one selected object comprise at least one of a type of the selected object, a size of the selected object, and an index of the selected object among all the objects contained in the container file.

In another example, the determining at least one parameter for each object selected from the malicious container file is performed using a second machine learning model, wherein the second machine learning model comprises a set of rules for determining the parameters of the objects such that each determined parameter increases a probability of classifying a target container file as malicious.

In another example, a system for training a machine learning model for detecting malicious container files is provided. The system includes a storage device configured to store a group of container files, and a hardware processor. The processor is configured to select a plurality of objects from a malicious container file, and determine at least one parameter for each object selected from the malicious container file. A container file is a file that contains at least two or more objects constituting logically separate data regions of the container file, and the at least one parameter characterizes a functional relation of the respective object to at least one other object in the container file. The processor is further configured to generate a first convolution associated with the malicious container file based on the determined at least one parameter, wherein the first convolution comprises a multidimensional vector in which each element of the multidimensional vector corresponds to its own unique parameter among the determined parameters, while the value

3

of the mentioned element corresponds to the number of objects for which the mentioned parameter has been determined, and generate a second convolution associated with a safe container file based on determined parameters of objects that are chosen from the safe container file. The processor is further configured to modify a machine learning model based on the first convolution associated with the malicious container file and the second convolution associated with the safe container file, wherein the machine learning model is configured to compute a degree of harmfulness of a container file under analysis.

The above simplified summary of example examples serves to provide a basic understanding of the present disclosure. This summary is not an extensive overview of all contemplated examples, and is intended to neither identify key or critical elements of all examples nor delineate the scope of any or all examples of the present disclosure. Its sole purpose is to present one or more examples in a simplified form as a prelude to the more detailed description of the disclosure that follows. To the accomplishment of the foregoing, the one or more examples of the present disclosure include the features described and exemplarily pointed out in the claims. The invention is disclosed in the appended claims.

## BRIEF DESCRIPTION OF THE DRAWINGS

The accompanying drawings, which are incorporated into and constitute a part of this specification, illustrate one or more example examples of the present disclosure and, together with the detailed description, serve to explain their principles and implementations.

**Fig. 1** shows a structural diagram of the system of teaching a model for detection of malicious containers.

**Fig. 2** shows a structural diagram of the method of teaching a model for detection of malicious containers.

**Fig. 3** shows a structural diagram of a system for scheduling of antivirus scan tasks.

**Fig. 4** shows a structural diagram of a method for scheduling of antivirus scan tasks.

**Fig. 5** shows an example of a general-purpose computer system, a personal computer or server.

## DETAILED DESCRIPTION

Examples are described herein in the context of a system, method, and computer program product for training machine learning models for detecting malicious container files. Those of ordinary skill in the art will realize that the following description is illustrative only and is not intended to be in any way limiting. Other examples will readily suggest themselves to those skilled in the art having the benefit of this disclosure. Reference will now be made in detail to implementations of the example examples as illustrated in the accompanying drawings. The same reference indicators will be used to the extent possible throughout the drawings and the following description to refer to the same or like items.

We shall introduce a number of definitions and terms that will be used to describe examples of the present disclosure.

*Vector* - is an abstract data type constituting an ordered set of values, in which a certain value may be encountered more than once, and all the values may be either of the same type or of different type. Instances of the values found in a vector are known as the elements (components) of the vector.

*Container* - is a type of file which may encapsulate in itself objects of other types. Containers, unlike collections, realize a particular data structure.

*Machine learning* (ML) - is a class of methods of artificial intelligence, the characteristic trait of which is not direct problem solving, but a teaching in the course of applying solutions from a group of similar problems. Such methods are constructed by the use of a means of mathematical statistics, numerical methods, optimization methods, the theory of probability, graph theory, and various techniques for working with data in digital form.

*Unsupervised learning* (self-learning, spontaneous learning) - is one of the methods of machine learning in which a system being tested is spontaneously taught to perform a stated task without intervention on the part of the experimenter. From the standpoint of cybernetics, it is one of the kinds of cybernetic experiment. As a rule, it is suitable only for problems in which descriptions are known for the set of objects (the training selection) and it is required to discover the internal links, dependencies and laws existing among the objects.

*Supervised learning* - is one of the methods of machine learning in which a system being tested is forced to learn with the aid of "stimulus/response" examples. From the standpoint of cybernetics, it is one of the kinds of cybernetic experiment. A certain dependency may exist between the inputs and the standard outputs (stimulus/response), but it is unknown. Only a finite group of precedents is known - the "stimulus/response" pair known as the training selection. On the basis of this data, it is required to reconstruct the dependency (construct a model of stimulus/response relations suitable for forecasting), that is, to construct an algorithm able to put out a sufficiently accurate response for any given object. A quality functional may be introduced to measure the accuracy of the responses, as in the case of teaching based on examples.

*Functional relation* - is a type of relation (link) between objects whereby changes in each of the objects accompany each other. In a functional relation, the primary features of a cause and effect relation are lacking: productiveness (the objects do not produce one another), asymmetry in time (they coexist, one of them does not precede another), and irreversibility.

Examples of the present disclosure are configured to teach a model for detection of malicious files. The technical result of the present disclosure is the realization of its purpose. Yet another technical result of the present disclosure is to increase the detection of malicious files when using a model for detection of malicious files by virtue of its retraining on previously detected malicious files. This technical result is an improvement in computer functionality, namely, in antivirus technologies, over traditional static and dynamic virus scanning, which fails to recognize dangers in container files. For example, traditional static virus scanning is unable to guarantee a high degree of verification, when the content of a container file was analyzed as it was (i.e., by comparing masks), due to the possibility of encryption of container objects. Meanwhile, traditional dynamic virus scanning would require each container object to be started (for example, in a virtual environment) and its behavior to be analyzed, which is very resource-intensive and slow. In contrast, examples of the present disclosure provide a system that analyzes the container file in a manner that solves both problems, i.e., a rapid analysis with a reliable verification of maliciousness (or not).

These results are accomplished with the use of a method of teaching a model for detection of malicious containers, wherein the container is a file containing at least two or more objects constituting logically separate data regions of the mentioned container (hereinafter, objects), wherein the method involves steps which are carried out by means of resources from a system of teaching a model for detection of malicious containers and in which a means of determination of parameters is used to determine the parameters of each object chosen from at least one safe container and one malicious container, uniquely characterizing the functional relation of the mentioned object to at least one selected object; a means of forming a convolution is used to form the convolutions separately for each container on the basis of the determined parameters of the objects chosen from the mentioned container, the convolution being a multidimensional vector, each element of which corresponds to its own unique parameter among the determined parameters, while the value of the mentioned element corresponds to the number of objects for which the mentioned parameter has been determined; a teaching means is used to carry out a machine teaching of the model for detection of malicious containers on the basis of the convolutions so formed, wherein the aforementioned model for detection is an algorithm for computing the degree of harmfulness of the container, while the degree of harmfulness of the container is a numerical value characterizing the probability that the mentioned container is malicious.

In another particular example of the method, the model for detection of malicious containers is further retrained in the event that the computed degree of harmfulness of the container lies within a previously determined range of threshold values such that the degree of harmfulness as computed on the basis of the parameters of the objects selected with the aid of the retrained model for determining parameters is greater than the degree of harmfulness computed on the basis of the parameters of the objects selected with the aid of the non-retrained model for detection of malicious containers.

In yet another particular example of the method, the container is at least: a PDF document; a distro; a file archive.

In another particular example of the method, the object selected from the container is at least: an executable file; a script; media data; and a container.

In yet another particular example of the method, the parameters of the object are at least: the type of object; the size of the object; the index of the object among all the objects contained in the container.

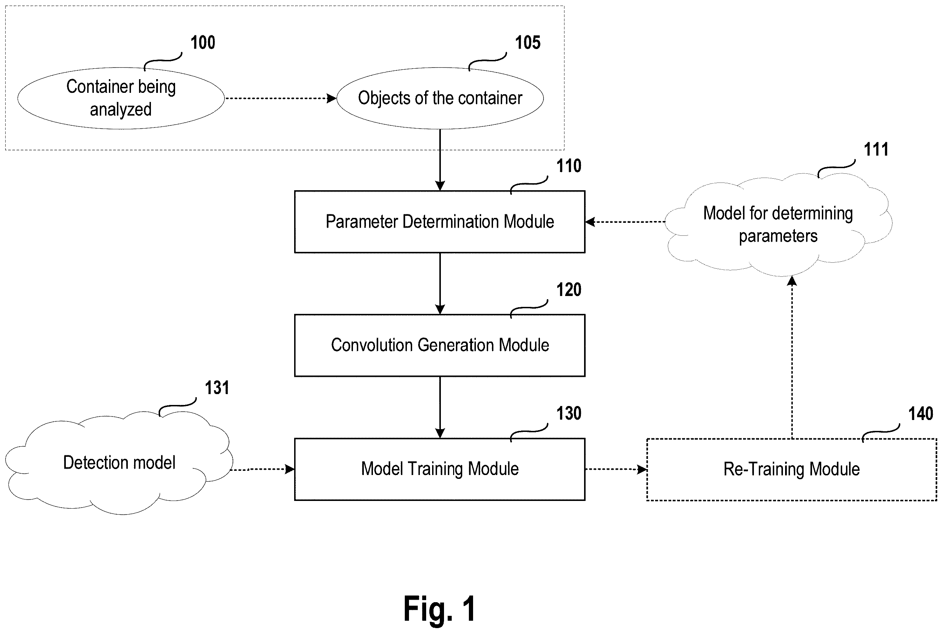

**Fig. 1** shows an example of the structural diagram of the system of teaching a model for detection of malicious containers. The system for teaching a model for detection of malicious containers includes a container **100** being analyzed, objects of the container **105**, parameter determination module **110**, a model for determining parameters **111**, convolution generation module **120**, model training module **130**, a detection model **131**, and a retraining module **140** configured to retraining of the model for determining parameters.

In one example, the container **100** is a file containing at least two objects **105**, which are logically separate data regions of the given container **100** (hereinafter, objects). The container **100** may be any file, package, or other data object that is configured and formatted to encapsulate multiple, logically separate data regions (which themselves may be files or other containers). In other words, the container **100** can be any given structured set of data from which it is technically possible to single out logically separate data regions as independent objects **105** on the basis of information about the aforementioned structure.

For example, the container **100** may be a PDF (Portable Document Format) document encapsulating objects that provide a complete description of a fixed-layout flat document, such as text, fonts, vector graphics, raster images, and other display information, as well as other logical structuring information, interactive elements (e.g., annotations, form fields), layers, video content, file attachments, metadata, and/or security-related objects (e.g., encryption keys, digital signatures). In another example, the container **100** may be an application containing SWF files (Flash application) or directly an SWF file itself. In yet other examples, a container **100** may be a Java applet; a software distro (such as a Windows installer formatted as a Microsoft Installer or "MSI") containing objects that are logically separate software components; or a file archive (such as a collection of files packaged by the WinZip archiver), where the objects **105** are files contained in the archive.

In some examples, a container **100** may be an electronic document (such as a Microsoft Office® document), formatted in a binary word format having multiple objects (i.e., "storages") as an OLE Compound File, or in XML-based file format having multiple objects stored in binary encoded blocks within the XML. For example, a Microsoft Excel electronic document "quarterly_report.xlsx" **100** may contain text data (such as descriptive formulas of the functional relation of the cells of the Microsoft Excel table with each other) **105.1**, images or OLE attachments (graphs constructed on the basis of data from the tables of said electronic document) **105.2,** and also other Microsoft Excel electronic documents **105.3.**

In yet another example of the system, the object **105** singled out from the container **100** is at least an executable file (including the library DLL); a script (for example, one written in the JavaScript language, ActionScript and so forth); media data (such as images, video, audio and so forth); another container file (such as a file archive embedded in another file archive); binary data; and text.

For example, a container **100** that is a file archive "archive.zip" may contain the executable file "viewer.exe" **105.4** and the image "family.jpg" **105.5**, while the mentioned executable file "viewer.exe" **105.4** is likewise a container **100**, since there is a known structure for it (the structure of PE files), which describes the file sections, and the resource section contains the image "me.tiff" **105.5.**

In other words, the object **105** may be data whose modification (including replacement and removal from the container **100**) can be done without changing the functional or the structure of the container **100** in which said data are stored, i.e., a modification of said objects **105** may be done without modification of other objects **105** contained in that container **100.**

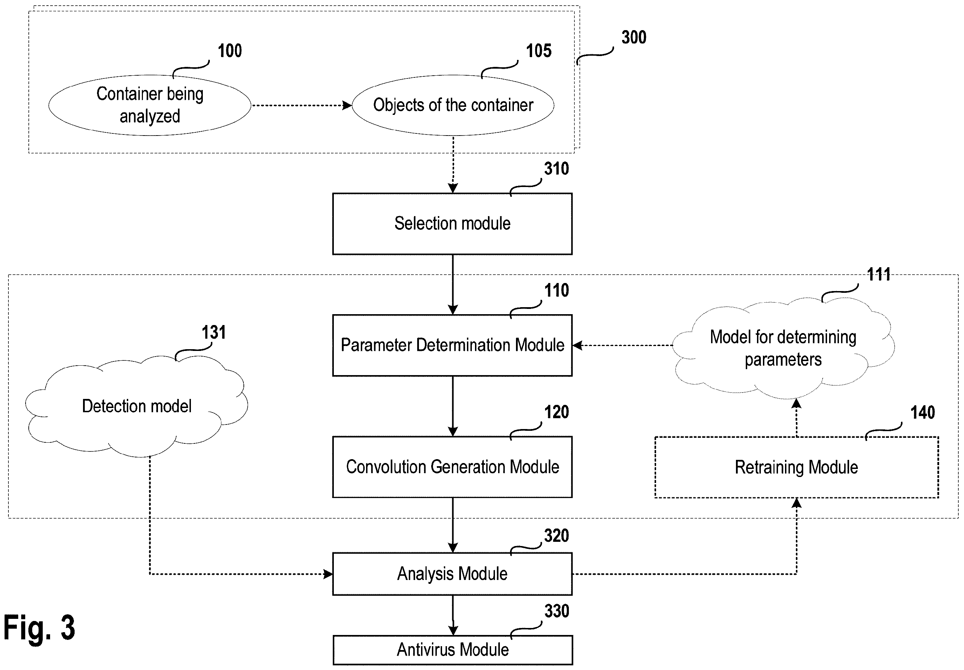

The described system may select for analysis one of the objects **105** from the container **100**, using a variety of techniques, and is described in greater detail in conjunction with **Fig. 3.**

The parameter determination module **110** is configured to determine the parameters of the objects **105** selected from the container being analyzed **100**, and to transfer the determined parameters to the convolution generation module **120**, at least one of the parameters characterizing the functional relation of the selected objects **105** with each other.

In one example of the system, the parameters of the object **105** include a parameter indicating the type of object **105** (for example, an image, text, media data, container, etc.); a parameter indicating the size of the object **105**; a parameter indicating the total size of the selected objects **105** of the determined type (for example, the total size of the images is 1020 kb, the total size of the text data is 12 kb, and so forth); and an index of the object **105** among all the objects **105** contained in the container **100**. In addition, the parameters are at least: the type of container **100** (for example, a zip archive, an SWF file, etc.); the size of the container **100**; the number of selected objects **105** in the container; and the total size of all selected objects **105.**

For example, the container "quarterly_report.xlsx" **100** may contain images "chart_01.jpg" **105.6**, "chart_02.jpg" **105.7** and a VBScript "viewer.vbs" **105.8**. The parameters of the objects **105** of the container **100** may be those presented in the Tables 1.1 and 1.2 below:

**Table 1.1**

| parameter | "chart_01.jpg" | "chart_02.jpg" | "viewer.vbs" |
|---|---|---|---|
| type | Image | Image | script |
| size | 15 kb | 78 kb | 2 kb |
| index | 1 | 2 | 3 |

**Table 1.2**

| parameter | summary statistics on objects of same type | |
|---|---|---|
| type | image | Script |
| total size | 93 kb | 2 kb |
| number of objects | 2 | 1 |

From the ratio of the size of the container **100** to the total of the sizes of the objects **105** of that container **100** there is furthermore determined the degree of unpacking of said container **100**. The degree of unpacking of the container may be a numerical quantity that characterizes: (i) how many objects **105** out of those stored in the container **100** have been selected, including how many objects of a determined type **105** (including in dependence on the type of the container **100**); and (ii) the total size of the selected objects **105** in relation to the size of the container **100** containing those objects (in other words, how many of the objects **105** contained in the container **100** were effectively extracted from it). In the event that the computed degree of unpacking of the container is less than a previously given threshold value, a decision is made that the unpacking of that container **100** is incomplete, and therefore said container **100** will be at least processed by other algorithms for selecting the objects **105**; and/or sent on for additional analysis to be done by any method known in the art.

In yet another example of the system for determining the parameters of the objects **105** selected from the container **100**, a trained model for determining parameters **111** is used, wherein said model for determining parameters **111** constitutes a set of rules for determining the parameters of the objects **105** so that each determined parameter increases the probability of classifying the analyzed container as malicious (i.e., parameters which cannot affect the harmfulness of the analyzed object or which decrease its harmfulness are not considered).

The parameters for a container object can be divided into two large groups, i.e., a first group of parameters on the basis of which it is possible to calculate the degree of harmfulness of a container or an object, and a second group of parameters on the basis of which it is unable to calculate the harmfulness of a container or object. The described system may refrain some determined parameters from use in training the machine learning model(s). That is, such parameters from the first group will not be considered (which compasses computing resources), i.e., if a certain parameter X is not a parameter from the first group, then it is ignored in further analysis. For example, a certain parameter X is not a parameter describing directly (for example, a hash sum from a black list) or indirectly (for example, the mask for a malicious IP address) the data of a malicious object **105** - that parameter will be definitely ignored by the trained model for determining parameters **111** and the object **105** which it describes will not be extracted from the container **100**. Another parameter Y indirectly describes the data of a malicious object **105**, and therefore depending on the value of other parameters the object **105** may be extracted with a certain probability from the container **100**. Furthermore the parameter Z directly describes the data of a malicious object **105**, so that this object **105** will definitely be extracted from the container **100**. A properly trained model for determining parameters **111** extracts only those objects **105** from the container **100** that can be characterized by parameters describing malicious objects **105** and consequently which influence the degree of harmfulness of the container **100**.

The convolution generation module **120** is configured to generate or form a convolution (the values of a convolution algorithm) on the basis of the parameters of the objects **105** determined by the parameter determination module **110**, being a multidimensional vector, each element of which corresponds to its own parameter from the group of determined parameters, while the value of that element corresponds to the number of objects **105** for which that parameter was determined, and to transfer the convolution so formed to the model training module **130**.

The algorithm for forming the convolution may be expressed mathematically as:

$$c = \sum_{i}^{n_p} e_i \times N(p_i)$$

where

$c$      - is the convolution so formed;
$e_i$      - is the base for the $i$-th parameter;
$p_i$      - is the $i$-th parameter;
$n_p$      - is the number of parameters determined for the objects **105**;
$N(p_i)$      - is the number of objects **105** for which the $i$-th parameter has been determined.

For example, from the parameters presented in **Table 1.2** there will be formed the convolution:
$c = [2,95232,1,2048]$,
where $c$ is a vector of which every element depends on one determined parameter:

    $c[0]$ - is the number of images selected from the container **100** (i.e., 2 images);
    $c[1]$ - is the total size of all images selected from the container **100** (i.e., 95232 bytes);
    $c[2]$ - is the number of scripts selected from the container **100** (i.e., 1 script);
    $c[3]$ - is the total size of all scripts selected from the container **100** (i.e., 2048 bytes).

In one example of the system, the parameters of the objects **105** used to form the convolution may be the values of the functions of the determined parameters of the objects **105**:

$p_j = f(pi)$,

i.e., the convolution may be expressed mathematically as:

$$c = \sum_j^{n_f} e_j \times N(f_j(\{p_i\}))$$

where

$c$       - is the convolution so formed;
$e_j$       - is the base for the *j*-th processing function of the parameters;
$\{p_i\}$       - is the group of parameters;
$n_f$       - is the number of specified processing functions $f(p_i)$ of the parameters determined for the objects **105**;
$f_j(\{p_i\})$       -is the *j*-th processing function of the parameters determined for the objects **105**;
$N(f_j)$       - is the number of objects **105** for which the value of the j-th function was determined.

For example, if the parameter is the size of the object **105**, while the size of the object **105** may lie in the range [0x00000000, 0xFFFFFFFF], then the vector constituting the convolution being formed in one example may contain at least (4294967296 + 1) elements (1 to save the total size of the objects **105** and 4294967296 to save the number of objects **105** of the specified size). Such a representation of the information about the container **100** and its objects **105** is superfluous and resource-hungry, and therefore instead of the size of the object **105** it is possible to use the value of a function of the size of the object **105** $f(p_i)$. For example, if the function is the binary logarithm $f = log_2$, then instead of 4294967296 elements of the vector to save the number of objects **105** of a given size, only 32 elements of the vector are needed ($2^{32}$ = 4294967296).

In yet another example of the system, the function $f(\{p_i\})$ may be a mathematical model, including an object containing conditional constructions.

For example, if the parameter is the size of the object **105**, while the size of the object 105 may lie in the range [0x00000000, 0xFFFFFFFF], the parameter of the object **105** may be an index in a predetermined range [0, *max*] (where *max* is a predetermined value greater than 0, selected from considerations as to the size of the vector, the processing speed of the vector, and so forth), calculated with the aid of a function of the size of the object **105** $f(p_i)$:

$$f(p) = \begin{cases} 0, p \in [0x00000000, 0x00001000) \\ 1, p \in [0x00001000, 0x000F0000) \\ 2, p \in [0x000F0000, 0x00AC0000) \\ 3, p \in [0x00AC0000, 0xF0000000) \\ 4, p \in [0xF0000000, 0xFFFFFFFF] \end{cases}.$$

Thus, instead of 4294967296 vector elements for the saving of the number of objects **105** of a given size, only 5 vector elements are needed. In the same way, any discrete parameter may be mapped by a discrete transformation onto another space of discrete parameters.

In yet another example of the system, the parameters of the above-described discrete transformation may be chosen on the basis of a previously performed analysis of the containers **100** such that the amount of information in the formulated convolution is a maximum for a predetermined size of the convolution. For example, if the parameter is the size of the object **105**, and the size of the object **105** may lie in the range [0x00000000, 0xFFFFFFFF], then the parameter of the object **105** may be an index in a predetermined range [0, *max*], calculated with the aid of a function of the size of the object **105**

*index* = f(p,{*limits*}),

where

*f* - is a function for the discrete transformation of a continuous parameter *p* into a discrete parameter *index*;
*index* - is the discrete parameter;
*p* - is the continuous parameter;
*{limits}* - is a set of parameters, expressed in the form of pairs *{min, max}* and describing the relation of the continuous parameter *p* to the discrete parameter *index.*

The parameters *{min, max}* are chosen such that the distribution of sizes of the objects **105** is uniform (with $(max_i - min_i) = const,$ the distribution is linear; with $(max_i - min_i) = e^{f(i)}$ it is a normal distribution).

The model training module **130** is configured for machine learning of the model for detection of malicious containers **131** on the basis of at least one convolution, formed for a (predetermined) safe container, and one convolution formed for a (predetermined) malicious container, said detection model **131** being an algorithm for calculating the degree of harmfulness of a container **100**, while the degree of harmfulness of a container **100** is a numerical value characterizing the probability that said container **100** is malicious. For example, the degree of harmfulness may be a real numerical value in the range of 0.0 to 1.0, where the value 0.0 means that the container being analyzed is guaranteed safe, and 1.0 that it is definitely malicious (i.e., malicious activity will occur if it is used on a computer). In yet another example, a sigmoid function is used for a binary classification of the harmfulness of containers being analyzed.

In one example of the system, the model training module **130** is additionally configured to retrain the model for detection of malicious containers **131** in the event that the calculated degree of harmfulness of the container **100** is in a predetermined range of threshold values, such that the degree of harmfulness as calculated with the retrained model for detection of malicious containers **131** is higher than the degree of harmfulness as calculated with the non-retrained model for detection of malicious containers **131.**

For example, if the degree of harmfulness of the container is in the range *[0,80..0,85]* (for example, *0.805*), while a container **100** is deemed to be malicious starting with a threshold value of *0.82,* the model for detection of malicious containers **131** is retrained such that the degree of harmfulness as calculated with the aid of the retrained model for detection of malicious containers **131** is greater than the mentioned value of *0.805* (such as *0.815*).

In yet another example, the retraining of the model for detection of malicious containers **131** is done whenever the calculated degree of harmfulness of the container **100** is greater than a predetermined threshold value. For example, if the degree of harmfulness of the container **100** is equal to *0.2*, the degree calculated with the aid of the retrained model for detection of malicious containers **131** is greater than said value of *0.2* (such as *0.21),* and if the degree of harmfulness of the container **100** is equal to *0.95,* the degree calculated with the aid of the retrained model for detection of malicious containers **131** is greater than said value of *0.95* (such as *0.99*). That is, the closer the degree of harmfulness of the container **100** to *1.0*, the more effectively is the model for detection of malicious containers **131** retrained.

The retraining module **140** is configured to retrain the model for determining parameters **111** in a predetermined range of threshold values, so that the degree of harmfulness calculated on the basis of the parameters of the objects **105** selected with the aid of the retrained model for determining parameters **111** is higher than the degree of harmfulness as calculated on the basis of the parameters of the objects **105** selected with the aid of the non-retrained model for determining parameters **111.**

In yet another example of the system, the retraining module **140** may be configured to: retrain the model for determining parameters **111**, add at least one container **100** to the teaching selection of the model for determining parameters **111**, and remove from the teaching selection of the model for determining parameters **111** at least one container.

In yet another example, the retraining of the model for determining parameters **111** uses at least the methods of machine learning: supervised learning (such as an artificial neural net, the error correcting method, the method of back propagation of mistakes, the method of reference vectors, and so forth); and unsupervised learning (such as the alpha reinforcement system, the gamma reinforcement system, the method of closest neighbors, and so forth).

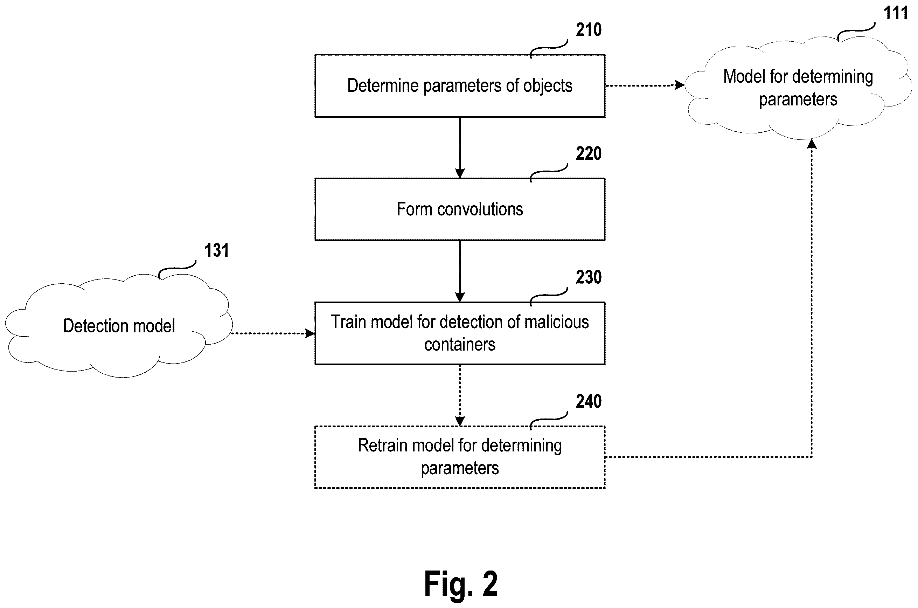

**Fig. 2** shows an example of a structural diagram of the method of teaching a model for detection of malicious containers. The structural diagram of the method of teaching a model for detection of malicious containers includes the step **210** in which the parameters of the objects are determined, step **220** in which the convolutions are formed, step **230** in which the model for detection of malicious containers is taught, and step **240** in which the model for determining parameters is retrained.

In step **210** the parameter determination module **110** is used to determine the parameters of objects **105** selected from at least one safe container **100.1** and one malicious container **100.2**, uniquely characterizing the functional relation between said object and at least one selected object (e.g., in the same container file). In some examples, the safe container and the malicious container may even be sub-containers within another container, and are analyzed individually and independently.

In one example the containers **100** are selected from a group of containers constituting at least: a training selection containing safe and malicious containers **100**; or a group of containers configured to perform an antivirus scan (determination of harmfulness of said containers **100**), the classifying of said containers **100** as safe or malicious not being known in advance. For example, the training selection of the containers may be prepared by analysts for the purpose of training the model for determining parameters **111** or the detection model **131.** In yet another example, the group of containers configured to perform the antivirus scan may be formed on the basis of gathered information with the aid of other means (for example, from users, from sites, with the aid of a crawler).

In step **220** the convolution generation module **120** is used to form convolutions separately for each container **100** on the basis of the determined parameters of objects **105** selected from said container **100**. The convolution may be represented as a multidimensional vector, each element of which corresponds to its own unique parameter from the determined parameters, while the value of that element corresponds to the number of objects **105** for which that parameter was determined.

In step **230** the model training module **130** is used to perform machine learning for the model for detection of malicious containers **131** on the basis of the formed convolutions, said detection model **131** being an algorithm for calculating the degree of harmfulness of the container **100**, while the degree of harmfulness of the container **100** is a numerical value characterizing the probability that said container **100** is malicious.

In step **240** the retraining module **140** is used to retrain the model for determining parameters **111** in the event that the calculated degree of harmfulness of the container **100** is greater than a predetermined threshold value such that the degree of harmfulness as calculated on the basis of the parameters of the objects **105** selected with the aid of the retrained model for determining parameters **111** is greater than the degree of harmfulness as calculated on the basis of the parameters of the objects **105** selected with the aid of the non-retrained model for determining parameters **111.**

**Fig. 3** shows an example of the structural diagram of a system for scheduling of antivirus scan tasks. The structural diagram of the system for scheduling of antivirus scan tasks includes a group of containers **300**, the container being analyzed **100**, the objects of the container **105**, a selection module **310**, the parameter determination module **110**, the model for determining parameters **111**, the convolution generation module **120**, the detection model **131**, the module **140** for retraining the model for determining parameters, an analysis module **320**, and an antivirus module **330** configured to schedule antivirus scan tasks.

The purpose and layout of the container being analyzed **100**, at least one object of the container **105**, the parameter determination module **110**, the model for determining parameters **111**, the convolution generation module **120**, the detection model **131** and the retraining module **140** have been described in detail above in **Fig. 1**, **Fig. 2.**

The group of containers **300** contains at least two containers. The diagram described in **Fig. 3** solves the problem of the distribution of computing resources for the analysis of harmfulness of containers from a group of containers **300.**

The selection module **310** is configured to select at least one object of a container **105** from a container being analyzed **100** and to send the selected objects **105** to the parameter determination module **110.** In one example of the system, the selection of an object of a container **105** from a container being analyzed **100** is done on the basis of information about the structure of that container **100** by any suitable known method. In yet another example of the system, the selection of objects **105** is done on the basis of predetermined selection rules, such as based on whether the size of the container is within a predetermined range of values; based on whether the container has a definite type; and based on whether the degree of harmfulness of the container is in a predetermined range of values.

Further analysis of a container **100** for harmfulness, given that the degree of harmfulness has already been calculated for said container **100**, is required to increase the effectiveness of the antivirus scan, and to decrease the errors of the first and second kind. Furthermore, the above-described method of determining the degree of harmfulness has high speed, low demands on computing resources, yet does not have the highest effectiveness (detection rate). For example, dynamic analysis in a virtual environment, or "sandbox", of a PDF file shows that when opened it is possible for new files to be saved to disk - it is possible for a shell code to be executed when said PDF file is opened, so that said PDF file requires further checking.

The convolution generation module **120** is further configured to send the formulated convolution to the analysis module **320.**

The analysis module **320** is configured to calculate the degree of harmfulness of the container being analyzed **100** on the basis of the convolution formed with the aid of the trained detection model **131** and to send the calculated degree of harmfulness to the antivirus module **330** for scheduling the antivirus scan tasks.

The antivirus module **330** is configured to determine the parameters of the antivirus scan for the container being analyzed **100**, the parameters of the antivirus scan characterizing the resources of the computing system on which that antivirus scan will be performed that are to be allocated to perform the antivirus scan for that container **100** in a specified time. In one example, the parameters of the antivirus scan may include the order of performing the antivirus scan for the containers from the group of containers **300**, and/or the computing resources allocated to performing the antivirus scan for each container from the group of containers **300**. In some examples, the parameters of the antivirus scan may further include the start and end time for performing the antivirus scan for each container from the group of containers **300**; and/or the method of the antivirus scan for each container from the group of containers **300.**

The goal in the scheduling of the antivirus scan tasks of containers for which the degrees of harmfulness have already been calculated is as follows: the advantage of the above-described method of determining the degree of harmfulness of a container is its high speed and low demands on computing resources. Thus, it is possible to correctly detect containers which are guaranteed clean (with very low degree of harmfulness) and guaranteed malicious (with very high degree of harmfulness). The remaining containers require further checking by slower, more resource-hungry, yet also more reliable means of checking as known in the art. Moreover, the more malicious a container might appear to be, the faster (i.e., sooner) it should be checked. This is the goal of the scheduling of the antivirus scan tasks. The above-described method coupled with the antivirus scan methods known in the art is able to reduce the errors of the first and second kind when performing the mentioned antivirus scan while increasing the overall speed in performing the antivirus scan and reducing the computing resources consumed.

For example, the higher the degree of harmfulness of the container being analyzed, the closer it will be placed to the start of the queue of containers for performance of the antivirus scan. The queue of containers for performance of the antivirus scan may itself be changed dynamically such that containers newly added to the queue with a higher degree of harmfulness will undergo the antivirus scan sooner than containers with a lower degree of harmfulness, even though the mentioned containers with a lower degree of harmfulness have been waiting longer. Thus, a dynamic queue of containers occurs, sorted by degree of harmfulness as obtained from other sources.

In yet another example, the start and end time for performance of the antivirus scan is calculated to be such that at least: (i) the antivirus scan of all the containers from the queue of containers for the antivirus scan will be completed within a time not exceeding a predetermined time; and/or (ii) the use of computing resources for the mentioned antivirus scan will not exceed predetermined objects.

In yet another example, some of the containers from the group of containers **300** may be excluded from the queue to perform the antivirus scan. For example, if the check sum calculated on the basis of a container (for example, MD5) is on a "white list" (a database of check sums calculated on the basis of safe containers), then that container is excluded from the queue to perform the antivirus scan and is considered to be safe. On the other hand, if that check sum appears on a "black list" (a database of check sums calculated on the basis of malicious containers), then that container is also excluded from the queue to perform the antivirus scan and is acknowledged as being malicious.

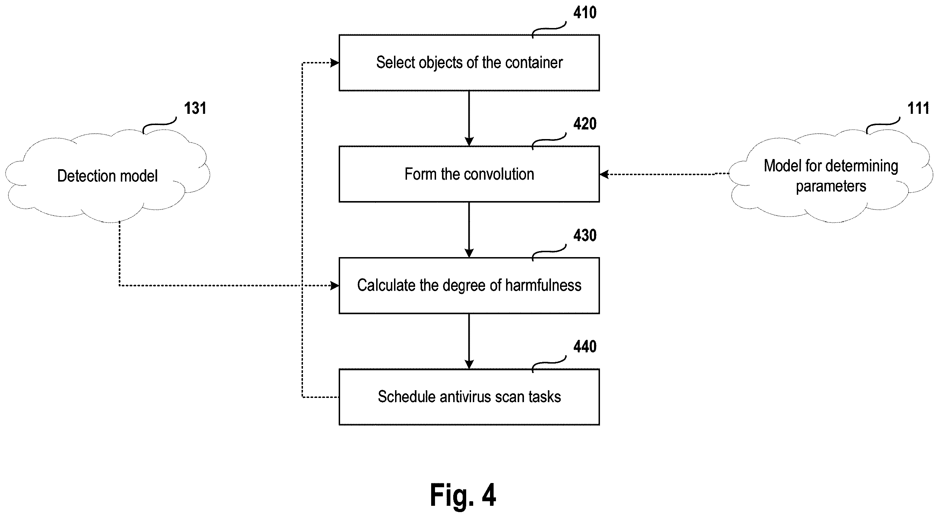

**Fig. 4** presents an example of the structural diagram of a method for scheduling of antivirus scan tasks. The structural diagram of the method for scheduling of antivirus scan tasks includes step **410** in which an object of a container is selected, step **420** in which the convolution is formed, step **430** in which the degree of harmfulness is calculated, and step **440** in which the antivirus scan tasks are scheduled.

In step **410** the selection module **310** is used to select at least one object of the container **105** from the container being analyzed **100**.

In one example the containers **100** are selected from a group of containers constituting at least: a training selection containing safe and malicious containers **100**; and/or a group of containers configured to perform an antivirus scan (determination of harmfulness of said containers **100**), the classifying of said containers **100** as safe or malicious not being known in advance. For example, the training selection of containers may be prepared by analysts for the purpose of training the model for determining parameters **111** or the detection model **131**.

In step **420** the convolution generation module **120** is used to form a convolution on the basis of the selected objects of the container **105**. In some examples, the convolution formed on the basis of the parameters of the objects **105** selected in step **410** is a multidimensional vector, each element of which corresponds to its own parameter from the group of determined parameters, while the value of that element corresponds to the number of objects **105** for which that parameter was determined, and the convolution so formed is transferred to the model training module **130**.

The algorithm for forming the convolution may be expressed mathematically as:

$$c = \sum_{i}^{n_p} e_i \times N(p_i)$$

where

$c$     - is the convolution so formed;
$e_i$     - is the base for the $i$-th parameter;
$p_i$     - is the $i$-th parameter;
$n_p$     - is the number of parameters determined for the objects **105;**
$N(p_i)$     - is the number of objects **105** for which the $i$-th parameter has been determined.

In step **430** the analysis module **320** is used to calculate the degree of harmfulness of the container being analyzed **100** on the basis of the convolution formed in step **420** with the aid of the trained detection model **131**.

In step **440** the antivirus module **330** for scheduling antivirus scan tasks is used to determine, on the basis of the degree of harmfulness of the container **100** as computed in step **430**, the parameters of the antivirus scan for the container being analyzed **100**, the parameters of the antivirus scan characterizing the resources of the computing system on which that antivirus scan will be performed that are to be allocated to perform the antivirus scan for that container **100** in a specified time.

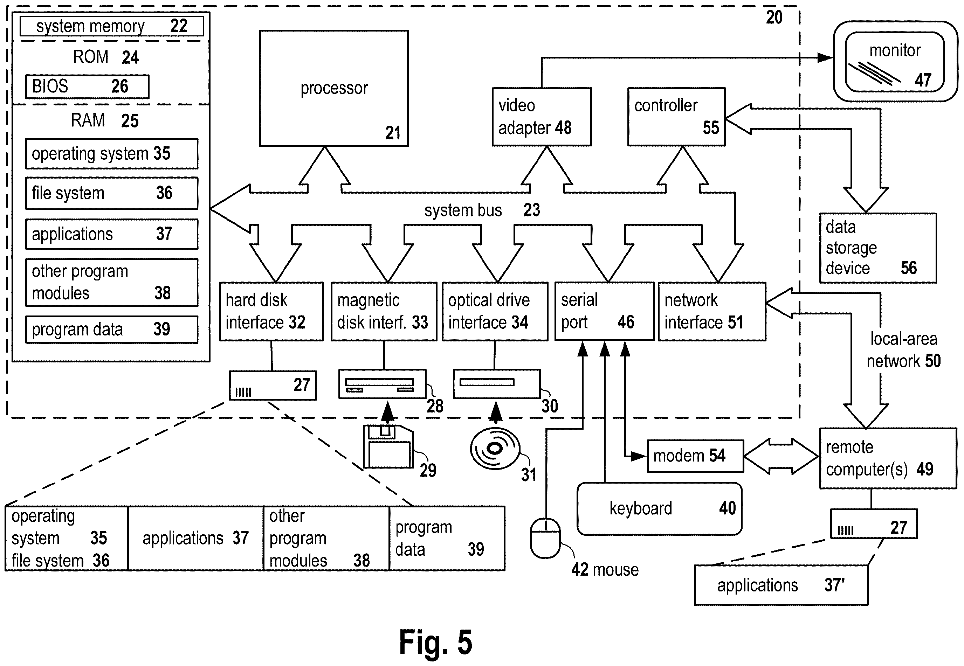

**Fig. 5** is a block diagram illustrating a computer system **20** on which examples of systems and methods for training a machine learning model for detecting malicious container files may be implemented in accordance with an example. It should be noted that the computer system **20** can implement one of more of the modules shown in **Figs. 1-4**, for example, described earlier.

As shown, the computer system **20** (which may be a personal computer or a server) includes a central processing unit **21**, a system memory **22**, and a system bus **23** connecting the various system components, including the memory associated with the central processing unit **21**. As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25**. The basic input/output system (BIOS) **26** may store the basic procedures for transfer of information between elements of the computer system **20**, such as those at the time of loading the operating system with the use of the ROM **24**.

The computer system **20** may also comprise a hard disk **27** for reading and writing data, a magnetic disk drive **28** for reading and writing on removable magnetic disks 29, and an optical drive **30** for reading and writing removable optical disks **31**, such as CD-ROM, DVD-ROM and other optical media. The hard disk **27**, the magnetic disk drive **28**, and the optical drive **30** are connected to the system bus **23** across the hard disk interface **32**, the magnetic disk interface **33**, and the optical drive interface **34**, respectively. The drives and the corresponding computer information media are power-independent modules for storage of computer instructions, data structures, program modules, and other data of the computer system **20**.

An example comprises a system that uses a hard disk **27**, a removable magnetic disk **29** and a removable optical disk **31** connected to the system bus **23** via the controller **55**. It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36**, in which the operating system **35** may be stored, as well as additional program applications **37**, other program modules **38**, and program data **39**. A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46**, which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48**. In addition to the monitor **47**, the personal computer may be equipped with other peripheral output devices (not shown), such as loudspeakers, a printer, *etc.*

Computer system **20** may operate in a network environment, using a network connection to one or more remote computers **49**. The remote computer (or computers) **49** may be local computer workstations or servers comprising most or all of the aforementioned elements in describing the nature of a computer system **20**. Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51**. When networks are used, the computer system **20** may employ a modem **54** or other modules well known to those of ordinary skill in the art that enable communications with a wide-area computer network such as the Internet. The modem **54**, which may be an internal or external device, may be connected to the system bus **23** by a serial port **46**. It will be appreciated by those of ordinary skill in the art that said network connections are nonlimiting examples of numerous well-understood ways of establishing a connection by one computer to another using communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in **Fig. 5**, above). Accordingly, each module may be realized in a variety of suitable configurations, and should not be limited to any particular implementation exemplified herein.

In the interest of clarity, not all of the routine features of the examples are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein.

**Claims**

1. A computer-implemented method for training a machine learning model for detecting malicious container files, comprising:

   selecting a plurality of objects from a malicious container file, wherein a container file is a file that contains at least two or more objects constituting logically separate data regions of the container file;
   determining at least one parameter for each object selected from the malicious container file, wherein the at least one parameter characterizes a functional relation of the respective object to at least one other object in the container file;
   generating a first convolution, associated with the malicious container file, based on the determined at least one parameter, wherein the first convolution comprises a multidimensional vector in which each element of the multidimensional vector corresponds to its own unique parameter among the determined parameters, while the value of the mentioned element corresponds to the number of objects for which the mentioned parameter has been determined;
   generating a second convolution, associated with a safe container file, based on determined parameters of objects that are chosen from the safe container file, wherein when a container file has a degree of harmfulness of 0.0, then this container file is guaranteed safe, and wherein when a container file has a degree of harmfulness of 1.0, then this container file is guaranteed malicious and
   modifying a machine learning model based on the first convolution associated with the malicious container file and the second convolution associated with the safe container file, wherein the machine learning model is configured to compute the degree of harmfulness of a container file under analysis.

2. The method according to claim 1, further comprising:
   applying the machine learning model to a target container file to compute the degree of harmfulness of the target container file, wherein the computed degree of harmfulness of the target container file is a numerical value characterizing a probability that the target container file under analysis is malicious.

3. The method according to claim 2, further comprising:
   responsive to determining the computed degree of harmfulness is in a predetermined range of threshold values, retraining the machine learning model such that the degree of harmfulness as calculated with the retrained model is higher than the degree of harmfulness as calculated with the original machine learning model.

4. The method according to claim 2, further comprising:
   scheduling an antivirus application to perform an antivirus scan of the target container file based on the computed degree of harmfulness.

5. The method according to any of claims 1 to 4, wherein the malicious container file is one of a PDF (Portable Document Format) document, a software distro, and a file archive.

6. The method according to any of claims 1 to 5, wherein the object selected from the container file is at least one of an executable file, a script, media data, and another container file.

7. The method according to any of claims 1 to 6, wherein the determined parameters of at least one selected object comprise at least one of a type of the selected object, a size of the selected object, and an index of the selected object among all the objects contained in the container file.

8. The method according to any of claims 1 to 7, wherein the determining at least one parameter for each object selected from the malicious container file is performed using a second machine learning model, wherein the second machine learning model comprises a set of rules for determining the parameters of the objects such that each determined parameter increases a probability of classifying a target container file as malicious.

9. A system for training a machine learning model for detecting malicious container files, the system comprising:

   a storage device configured to store a group of container files;
   a hardware processor configured to:

   select a plurality of objects from a malicious container file, wherein a container file is a file that contains at least two or more objects constituting logically separate data regions of the container file;
   determine at least one parameter for each object selected from the malicious container file, wherein the at least one parameter characterizes a functional relation of the respective object to at least one other object in the container file;
   generate a first convolution, associated with the malicious container file, based on the determined at least one parameter, wherein the first convolution comprises a multidimensional vector in which each element of the multidimensional vector corresponds to its own unique parameter among the determined parameters, while the value of the mentioned element corresponds to the number of objects for which the mentioned parameter has been determined;
   generate a second convolution, associated with a safe container file, based on determined parameters of objects that are chosen from the safe container file, wherein when a container file has a degree of harmfulness of 0.0, then this container file is guaranteed safe, and wherein when a container file has a degree of harmfulness of 1.0, then this container file is guaranteed malicious; and
   modify a machine learning model based on the first convolution associated with the malicious container file and the second convolution associated with the safe container file, wherein the machine learning model is configured to compute the degree of harmfulness of a container file under analysis.

10. The system according to claim 9, wherein the processor is configured to:
    apply the machine learning model to a target container file to compute the degree of harmfulness of the target container file, wherein the computed degree of harmfulness of the target container file is a numerical value characterizing a probability that the target container file under analysis is malicious.

11. The system according to claim 10, wherein the processor is configured to:
    responsive to determining the computed degree of harmfulness is in a predetermined range of threshold values, retrain the machine learning model such that the degree of harmfulness as calculated with the retrained model is higher than the degree of harmfulness as calculated with the original machine learning model.

12. The system according to claim 10, wherein the processor is configured to:
    schedule an antivirus application to perform an antivirus scan of the target container file based on the computed degree of harmfulness.

13. The system according to any of claims 9 to 12, wherein the malicious container file is one of a PDF (Portable Document Format) document, a software distro, and a file archive.

14. The system according to any of claims 9 to 13, wherein the object selected from the container file is at least one of an executable file, a script, media data, and another container file.

15. The system according to any of claims 9 to 14, wherein the determined parameters of at least one selected object comprise at least one of a type of the selected object, a size of the selected object, and an index of the selected object among all the objects contained in the container file.

16. The system according to any of claims 9 to 15, wherein the determination of at least one parameter for each object selected from the malicious container file is performed using a second machine learning model, wherein the second machine learning model comprises a set of rules for determining the parameters of the objects such that each determined parameter increases a probability of classifying a target container file as malicious.

**Patentansprüche**

1. Computerimplementiertes Verfahren zum Trainieren eines maschinellen Lernmodells zum Erkennen schädlicher Containerdateien, umfassend:

Auswählen einer Mehrzahl von Objekten aus einer schädlichen Containerdatei, wobei eine Containerdatei eine Datei ist, die zumindest zwei oder mehr Objekte enthält, die logisch getrennte Datenbereiche der Containerdatei darstellen bzw. bilden;
Bestimmen zumindest eines Parameters für jedes aus der schädlichen Containerdatei ausgewählte Objekt, wobei der zumindest eine Parameter eine funktionale Beziehung des jeweiligen Objekts zu zumindest einem anderen Objekt in der Containerdatei charakterisiert;
Erzeugen einer ersten Konvolution, die mit der schädlichen Containerdatei verknüpft ist, basierend auf dem bestimmten zumindest einen Parameter, wobei die erste Konvolution einen mehrdimensionalen Vektor umfasst, bei dem jedes Element des mehrdimensionalen Vektors seinem eigenen eindeutigen Parameter unter den bestimmten Parametern entspricht, während der Wert des genannten Elements der Anzahl an Objekten entspricht, für die der genannte Parameter ermittelt wurde;
Erzeugen einer zweiten Konvolution, die mit einer sicheren Containerdatei verknüpft ist, basierend auf bestimmten Parametern von Objekten, die aus der sicheren Containerdatei ausgewählt werden, wobei, wenn eine Containerdatei einen Grad an Schädlichkeit von 0,0 aufweist, diese Containerdatei garantiert sicher ist, und wobei, wenn eine Containerdatei einen Grad an Schädlichkeit von 1,0 aufweist, diese Containerdatei garantiert schädlich ist; und
Modifizieren eines maschinellen Lernmodells basierend auf der ersten Konvolution, die mit der schädlichen Containerdatei verknüpft ist, und der zweiten Konvolution, die mit der sicheren Containerdatei verknüpft ist, wobei das maschinelle Lernmodell konfiguriert ist, den Grad an Schädlichkeit einer zu analysierenden Containerdatei zu berechnen.

2. Verfahren nach Anspruch 1, ferner umfassend:
Anwenden des maschinellen Lernmodells auf eine Zielcontainerdatei, um den Grad an Schädlichkeit der Zielcontainerdatei zu berechnen, wobei der berechnete Grad an Schädlichkeit der Zielcontainerdatei ein numerischer Wert ist, der eine Wahrscheinlichkeit charakterisiert, dass die zu analysierende Zielcontainerdatei schädlich ist.

3. Verfahren nach Anspruch 2, ferner umfassend:
ansprechend auf das Bestimmen, dass der berechnete Grad an Schädlichkeit in einem vorbestimmten Bereich von Schwellenwerten liegt, Umtrainieren des maschinellen Lernmodells derart, dass der mit dem umtrainierten Modell berechnete Grad an Schädlichkeit höher ist als der mit dem ursprünglichen maschinellen Lernmodell berechnete Grad an Schädlichkeit.

4. Verfahren nach Anspruch 2, ferner umfassend:
Planen einer Antivirenanwendung, um einen Antivirenscan der Zielcontainerdatei durchzuführen, und zwar basierend auf dem berechneten Grad an Schädlichkeit.

5. Verfahren nach einem der Ansprüche 1 bis 4, wobei die schädliche Containerdatei eine von einem PDF(Portable Document Format)-Dokument, einer Software-Distribution und einem Dateiarchiv ist.

6. Verfahren nach einem der Ansprüche 1 bis 5, wobei das aus der Containerdatei ausgewählte Objekt zumindest eine ausführbare Datei, ein Skript, Mediendaten und eine andere Containerdatei ist.

7. Verfahren nach einem der Ansprüche 1 bis 6, wobei die bestimmten Parameter von zumindest einem ausgewählten Objekt zumindest eines von einem Typ des ausgewählten Objekts, einer Größe des ausgewählten Objekts und eines Index des ausgewählten Objekts aus bzw. unter allen in der Containerdatei enthaltenen Objekten umfassen.

8. Verfahren nach einem der Ansprüche 1 bis 7, wobei das Bestimmen zumindest eines Parameters für jedes aus der schädlichen Containerdatei ausgewählte Objekt unter Verwendung eines zweiten maschinellen Lernmodells durchgeführt wird, wobei das zweite maschinelle Lernmodell einen Satz von Regeln zum Bestimmen der Parameter der Objekte umfasst, so dass jeder bestimmte Parameter eine Wahrscheinlichkeit erhöht, eine Zielcontainerdatei als schädlich zu klassifizieren.

9. System zum Trainieren eines maschinellen Lernmodells zum Erkennen schädlicher Containerdateien, wobei das System umfasst:

eine Speichervorrichtung, die zum Speichern einer Gruppe von Containerdateien konfiguriert ist;
einen Hardwareprozessor, der konfiguriert ist zum:

Auswählen einer Mehrzahl von Objekten aus einer schädlichen Containerdatei, wobei eine Containerdatei eine Datei ist, die zumindest zwei oder mehr Objekte enthält, die logisch getrennte Datenbereiche der Containerdatei darstellen bzw. bilden;
Bestimmen zumindest eines Parameters für jedes aus der schädlichen Containerdatei ausgewählte Objekt, wobei der zumindest eine Parameter eine funktionale Beziehung des jeweiligen Objekts zu zumindest einem anderen Objekt in der Containerdatei charakterisiert;
Erzeugen einer ersten Konvolution, die mit der schädlichen Containerdatei verknüpft ist, basierend auf dem bestimmten zumindest einen Parameter, wobei die erste Konvolution einen mehrdimensionalen Vektor umfasst, bei dem jedes Element des mehrdimensionalen Vektors seinem eigenen eindeutigen Parameter unter den bestimmten Parametern entspricht, während der Wert des genannten Elements der Anzahl an Objekten entspricht, für die der genannte Parameter ermittelt wurde;
Erzeugen einer zweiten Konvolution, die mit einer sicheren Containerdatei verknüpft ist, basierend auf bestimmten Parametern von Objekten, die aus der sicheren Containerdatei ausgewählt werden, wobei, wenn eine Containerdatei einen Grad an Schädlichkeit von 0,0 aufweist, diese Containerdatei garantiert sicher ist, und wobei, wenn eine Containerdatei einen Grad an Schädlichkeit von 1,0 aufweist, diese Containerdatei garantiert schädlich ist; und
Modifizieren eines maschinellen Lernmodells basierend auf der ersten Konvolution, die mit der schädlichen Containerdatei verknüpft ist, und der zweiten Konvolution, die mit der sicheren Containerdatei verknüpft ist, wobei das maschinelle Lernmodell konfiguriert ist, den Grad an Schädlichkeit einer zu analysierenden Containerdatei zu berechnen.

10. System nach Anspruch 9, wobei der Prozessor konfiguriert ist zum:
Anwenden des maschinellen Lernmodells auf eine Zielcontainerdatei, um den Grad an Schädlichkeit der Zielcontainerdatei zu berechnen, wobei der berechnete Grad an Schädlichkeit der Zielcontainerdatei ein numerischer Wert ist, der eine Wahrscheinlichkeit charakterisiert, dass die zu analysierende Zielcontainerdatei schädlich ist.

11. System nach Anspruch 10, wobei der Prozessor konfiguriert ist zum:
ansprechend auf das Bestimmen, dass der berechnete Grad an Schädlichkeit in einem vorbestimmten Bereich von Schwellenwerten liegt, Umtrainieren des maschinellen Lernmodells derart, dass der mit dem umtrainierten Modell berechnete Grad an Schädlichkeit höher ist als der mit dem ursprünglichen maschinellen Lernmodell berechnete Grad an Schädlichkeit.

12. System nach Anspruch 10, wobei der Prozessor konfiguriert ist zum:
Planen einer Antivirenanwendung, um einen Antivirenscan der Zielcontainerdatei durchzuführen, und zwar basierend auf dem berechneten Grad an Schädlichkeit.

13. System nach einem der Ansprüche 9 bis 12, wobei die schädliche Containerdatei eine von einem PDF(Portable Document Format)-Dokument, einer Software-Distribution und einem Dateiarchiv ist.

14. System nach einem der Ansprüche 9 bis 13, wobei das aus der Containerdatei ausgewählte Objekt zumindest eine ausführbare Datei, ein Skript, Mediendaten und eine andere Containerdatei ist.

**15.** System nach einem der Ansprüche 9 bis 14, wobei die bestimmten Parameter von zumindest einem ausgewählten Objekt zumindest eines von einem Typ des ausgewählten Objekts, einer Größe des ausgewählten Objekts und eines Index des ausgewählten Objekts aus bzw. unter allen in der Containerdatei enthaltenen Objekten umfassen.

**16.** System nach einem der Ansprüche 9 bis 15, wobei die Bestimmung zumindest eines Parameters für jedes aus der schädlichen Containerdatei ausgewählte Objekt unter Verwendung eines zweiten maschinellen Lernmodells durchgeführt wird, wobei das zweite maschinelle Lernmodell einen Satz von Regeln zum Bestimmen der Parameter der Objekte umfasst, so dass jeder bestimmte Parameter eine Wahrscheinlichkeit erhöht, eine Zielcontainerdatei als schädlich zu klassifizieren.

**Revendications**

**1.** Procédé, mis en œuvre par ordinateur, pour entraîner un modèle d'apprentissage automatique pour détecter des fichiers conteneurs malveillants, comprenant :

la sélection d'une pluralité d'objets à partir d'un fichier conteneur malveillant, dans lequel un fichier conteneur est un fichier qui contient au moins deux objets ou plus constituant des régions de données distinctes de manière logique du fichier conteneur ;
la détermination d'au moins un paramètre pour chaque objet sélectionné à partir du fichier conteneur malveillant, dans lequel l'au moins un paramètre caractérise une relation fonctionnelle de l'objet respectif à au moins un autre objet dans le fichier conteneur ;
la génération d'une première convolution, associée au fichier conteneur malveillant, sur la base de l'au moins un paramètre déterminé, dans lequel la première convolution comprend un vecteur multidimensionnel dans lequel chaque élément du vecteur multidimensionnel correspond à son propre paramètre unique parmi les paramètres déterminés, tandis que la valeur de l'élément mentionné correspond au nombre d'objets pour lesquels le paramètre mentionné a été déterminé ;
la génération d'une seconde convolution, associée à un fichier conteneur sûr, sur la base de paramètres déterminés d'objets qui sont choisis à partir du fichier conteneur sûr, dans lequel lorsqu'un fichier conteneur a un degré de nocivité de 0,0, alors ce fichier conteneur est garanti sûr, et dans lequel lorsqu'un fichier conteneur a un degré de nocivité de 1,0, alors ce fichier conteneur est garanti malveillant ; et
la modification d'un modèle d'apprentissage machine sur la base de la première convolution associée au fichier conteneur malveillant et de la seconde convolution associée au fichier conteneur sûr, dans lequel le modèle d'apprentissage machine est configuré pour calculer le degré de nocivité d'un fichier conteneur en cours d'analyse.

**2.** Procédé selon la revendication 1, comprenant en outre :
l'application du modèle d'apprentissage machine à un fichier conteneur cible pour calculer le degré de nocivité du fichier conteneur cible, dans lequel le degré calculé de nocivité du fichier conteneur cible est une valeur numérique caractérisant une probabilité que le fichier conteneur cible en cours d'analyse soit malveillant.

**3.** Procédé selon la revendication 2, comprenant en outre :
en réponse à la détermination du fait que le degré calculé de nocivité est dans une plage prédéterminée de valeurs de seuil, le réentraînement du modèle d'apprentissage machine de sorte que le degré de nocivité tel que calculé avec le modèle réentraîné soit supérieur au degré de nocivité tel que calculé avec le modèle d'apprentissage machine original.

**4.** Procédé selon la revendication 2, comprenant en outre :
la planification d'une application antivirus pour mettre en œuvre un balayage antivirus du fichier conteneur cible sur la base du degré calculé de nocivité.

**5.** Procédé selon l'une quelconque des revendications 1 à 4, dans lequel le fichier conteneur malveillant est l'un parmi un document PDF (Portable Document Format), une distribution de logiciels, et une archive de fichiers.

**6.** Procédé selon l'une quelconque des revendications 1 à 5, dans lequel l'objet sélectionné à partir du fichier conteneur est au moins l'un parmi un fichier exécutable, un script, des données multimédias, et un autre fichier conteneur.

**7.** Procédé selon l'une quelconque des revendications 1 à 6, dans lequel les paramètres déterminés d'au moins un objet sélectionné comprennent au moins l'un parmi un type de l'objet sélectionné, une taille de l'objet sélectionné, et un indice de l'objet sélectionné parmi tous les objets contenus dans le fichier conteneur.

8. Procédé selon l'une quelconque des revendications 1 à 7, dans lequel la détermination d'au moins un paramètre pour chaque objet sélectionné à partir du fichier conteneur malveillant est mise en œuvre en utilisant un second modèle d'apprentissage automatique, dans lequel le second modèle d'apprentissage automatique comprend un ensemble de règles permettant de déterminer les paramètres des objets de sorte que chaque paramètre déterminé augmente une probabilité de classer un fichier conteneur cible comme étant malveillant.

9. Système pour entraîner un modèle d'apprentissage automatique pour détecter des fichiers conteneurs malveillants, le système comprenant :

   un dispositif de stockage configuré pour stocker un groupe de fichiers conteneurs ;
   un processeur matériel configuré pour :

      sélectionner une pluralité d'objets à partir d'un fichier conteneur malveillant, dans lequel un fichier conteneur est un fichier qui contient au moins deux objets ou plus constituant des régions de données distinctes de manière logique du fichier conteneur ;
      déterminer au moins un paramètre pour chaque objet sélectionné à partir du fichier conteneur malveillant, dans lequel l'au moins un paramètre caractérise une relation fonctionnelle de l'objet respectif à au moins un autre objet dans le fichier conteneur ;
      générer une première convolution, associée au fichier conteneur malveillant, sur la base de l'au moins un paramètre déterminé, dans lequel la première convolution comprend un vecteur multidimensionnel dans lequel chaque élément du vecteur multidimensionnel correspond à son propre paramètre unique parmi les paramètres déterminés, tandis que la valeur de l'élément mentionné correspond au nombre d'objets pour lesquels le paramètre mentionné a été déterminé ;
      générer une seconde convolution, associée à un fichier conteneur sûr, sur la base de paramètres déterminés d'objets qui sont choisis à partir du fichier conteneur sûr, dans lequel lorsqu'un fichier conteneur a un degré de nocivité de 0,0, alors ce fichier conteneur est garanti sûr, et dans lequel lorsqu'un fichier conteneur a un degré de nocivité de 1,0, alors ce fichier conteneur est garanti malveillant ;
      modifier un modèle d'apprentissage machine sur la base de la première convolution associée au fichier conteneur malveillant et de la seconde convolution associée au fichier conteneur sûr, dans lequel le modèle d'apprentissage machine est configuré pour calculer le degré de nocivité d'un fichier conteneur en cours d'analyse.

10. Système selon la revendication 9, dans lequel le processeur est configuré pour :
    appliquer le modèle d'apprentissage machine à un fichier conteneur cible pour calculer le degré de nocivité du fichier conteneur cible, dans lequel le degré calculé de nocivité du fichier conteneur cible est une valeur numérique caractérisant une probabilité que le fichier conteneur cible en cours d'analyse soit malveillant.

11. Système selon la revendication 10, dans lequel le processeur est configuré pour :
    en réponse à la détermination du fait que le degré calculé de nocivité est dans une plage prédéterminée de valeurs de seuil, réentraîner le modèle d'apprentissage machine de sorte que le degré de nocivité tel que calculé avec le modèle réentraîné soit supérieur au degré de nocivité tel que calculé avec le modèle d'apprentissage machine original.

12. Système selon la revendication 10, dans lequel le processeur est configuré pour :
    planifier une application antivirus pour mettre en œuvre un balayage antivirus du fichier conteneur cible sur la base du degré calculé de nocivité.

13. Système selon l'une quelconque des revendications 9 à 12, dans lequel le fichier conteneur malveillant est l'un parmi un document PDF (Portable Document Format), une distribution de logiciels, et une archive de fichiers.

14. Système selon l'une quelconque des revendications 9 à 13, dans lequel l'objet sélectionné à partir du fichier conteneur est au moins l'un parmi un fichier exécutable, un script, des données multimédias, et un autre fichier conteneur.

15. Système selon l'une quelconque des revendications 9 à 14, dans lequel les paramètres déterminés d'au moins l'un objet sélectionné comprennent au moins un parmi un type de l'objet sélectionné, une taille de l'objet sélectionné, et un indice de l'objet sélectionné parmi tous les objets contenus dans le fichier conteneur.

16. Système selon l'une quelconque des revendications 9 à 15, dans lequel la détermination d'au moins un paramètre pour chaque objet sélectionné à partir du fichier conteneur malveillant est mise en œuvre en utilisant un second modèle d'apprentissage automatique, dans lequel le second modèle d'apprentissage automatique comprend un ensemble de règles permettant de déterminer les paramètres des objets de sorte que chaque paramètre déterminé augmente une probabilité de classer un fichier conteneur cible comme étant malveillant.

**Fig. 1**

**Fig. 2**

**Fig. 3**

**410** Select objects of the container

**420** Form the convolution

**430** Calculate the degree of harmfulness

**440** Schedule antivirus scan tasks

**131** Detection model

**111** Model for determining parameters

Fig. 4

EP 3 522 080 B1

**Fig. 5**

EP 3 522 080 B1